# EUROPÄISCHE PATENTANMELDUNG

(11) **EP 4 193 893 A1**
(43) Veröffentlichungstag der Anmeldung: **14.06.2023**
(21) Anmeldenummer: 22208084.8
(22) Anmeldetag: 17.11.2022
(51) Int. Cl.: A47J 37/07

(54) **OUTDOOR-GASGRILL**

(30) Priorität: 08.12.2021 DE 102021213975
(71) Anmelder: RÖSLE GROUP GmbH, 87616 Marktoberdorf (DE)
(72) Erfinder: Jung, David, 87439 Kempten (DE)
(74) Vertreter: Dr. Weitzel & Partner

(57) **Zusammenfassung**

Die Erfindung betrifft einen Outdoor-Gasgrill
mit einem Garraum (3), wobei
der Garraum (3) zumindest in horizontaler Umfangsrichtung von einer Garraumwand (40) umschlossen wird und
die Garraumwand (3) Brenner (14) in Form von gasführenden Rohren (41) mit jeweils einer Vielzahl von Gasauslassöffnungen (41.1) trägt, wobei sich die Rohre in einer ersten Richtung horizontal durch den Garraum (3) erstrecken.

Der erfindungsgemäße Outdoor-Gasgrill ist dadurch gekennzeichnet, dass die gasführenden Rohre (41) ausschließlich auf wenigstens zwei Streben (42) montiert sind, die sich horizontal in einer zweiten Richtung senkrecht oder schräg zur ersten Richtung im Garraum (3) erstrecken, wobei die Streben (42) herausnehmbar im Garraum (3) montiert sind.

## Beschreibung

Die vorliegende Erfindung betrifft einen Outdoor-Gasgrill gemäß dem Oberbegriff von Anspruch 1.

Outdoor-Grills erfreuen sich einer zunehmenden Beliebtheit, insbesondere in Form von Gasgrills in Privathaushalten und im Rahmen von Betriebsveranstaltungen auch in Unternehmen. Wenn ein solcher Outdoor-Grill als Gasgrill ausgeführt ist, so können damit lange Anglühzeiten vermieden werden und rasch verschiedene Temperaturniveaus, insbesondere in verschiedenen Temperaturzonen, zur Verfügung gestellt werden, die ein besonders luxuriöses Grillerlebnis bieten.

Eine lästige Arbeit, die bei Outdoor-Grills verbleibt, ist die Reinigung des Outdoor-Grills nach der Nutzung. Zur Erleichterung können die Outdoor-Grills nach der Zubereitung des Essens auf ihre volle Leistung eingestellt werden, sodass sich der Grillrost und die sich in der Umgebung der Brenner befindlichen Teile so stark erhitzen, dass an ihnen anhaftende Speisereste verkohlen. Die verkohlten Speisereste können dann mit einer Bürste abgebürstet werden. Trotzdem verbleiben Bauteile, die gereinigt werden müssen, beispielsweise Fettwannen und nicht im unmittelbaren Hitzebereich angeordnete mit Speiseresten oder Fett beschmutzte Flächen.

Der vorliegenden Erfindung liegt die Aufgabe zugrunde, einen Outdoor-Gasgrill anzugeben, bei dem der Reinigungsaufwand reduziert ist und das Reinigen erleichtert wird.

Die erfindungsgemäße Aufgabe wird durch einen Outdoor-Gasgrill mit den Merkmalen von Anspruch 1 gelöst. Die abhängigen Ansprüche beschreiben vorteilhafte und besonders zweckmäßige Ausgestaltungen der Erfindung.

Ein erfindungsgemäßer Outdoor-Gasgrill weist einen Garraum auf, der beispielsweise auf einem Untergestell angeordnet ist. Das Untergestell bildet beispielsweise einen Schrank mit wenigstens einer Schwingtüre aus. Die wenigstens eine Schwingtüre überdeckt die Vorderseite des Untergestells wenigstens teilweise oder zumindest im Wesentlichen vollständig und ist um eine Vertikalachse seitlich nach außen verschwenkbar. Ferner kann das Untergestell einen oder zwei Seitentische aufweisen, der/die seitlich zum Garraum auf jeweils einer Außenseite des Untergestells montiert ist/sind.

Der Garraum wird erfindungsgemäß zumindest in horizontaler Umfangsrichtung von einer Garraumwand umschlossen und die Garraumwand trägt eine Mehrzahl von Brennern jeweils in Form eines gasführenden Rohres mit einer Vielzahl von Gasauslassöffnungen, wobei sich die Rohre in einer ersten Richtung horizontal durch den Garraum erstrecken.

Erfindungsgemäß sind die gasführenden Rohre nur auf wenigstens zwei Streben, die insbesondere parallel zueinander sind, montiert, die sich horizontal in einer zweiten Richtung senkrecht oder schräg zur ersten Richtung der gasführenden Rohre im Garraum erstrecken. Die Streben erstrecken sich beispielsweise in der Querrichtung, das heißt parallel zur Vorderseite des Untergestells und/oder des Garraums. Die Streben sind erfindungsgemäß herausnehmbar im Garraum montiert, bevorzugt einzeln herausnehmbar.

Somit kann das gesamte Innenleben im Garraum zum Reinigen des Garraums und des Innenlebens leicht aus dem Garraum entnommen werden. Ferner kann die Garraumwand mit wenigen Vorsprüngen und Kanten ausgeführt sein, die eine Reinigung erschweren. Zudem können sich Fett und Ablagerungen nicht hartnäckig an der Garraumwand anlagern, weil auf horizontale Flächen weitgehend verzichtet werden kann.

Bevorzugt sind die Streben lösbar, bevorzugt einzeln lösbar, an der Garraumwand montiert, beispielsweise mit von Hand lösbaren Schrauben. Hierfür haben sich handbetätige Rändelschrauben besonders bewährt. Damit können die Streben ohne Werkzeug demontiert und, bevorzugt einzeln, aus dem Garraum entfernt werden. Zusätzlich oder alternativ können die Streben auch werkezugfrei demontierbar sein, indem sie mit einer Steckverbindung im Garraum montiert sind, die mit wenigstens einem Sicherungselement, beispielsweise einem Splint, gesichert ist.

Wenigstens eine Strebe, zwei Streben oder, wenn mehr als zwei Streben vorgesehen sind, gegebenenfalls auch drei oder mehr, insbesondere alle Streben, ist/sind bevorzugt als Hohlstrebe ausgeführt, die einen Gaskanal umschließt, der in gasleitender Verbindung mit den gasführenden Rohren steht, die die Brenner ausbilden.

Somit kann über die Strebe(n) entflammbares Gas transportiert werden und automatisch Brenner entflammen, bei denen die Flamme erloschen ist. Somit kann kein Gas ohne Verbrennung ausströmen und die Brenner können immer wieder entzündet werden. Die Streben dienen somit als sogenannte Flammbrücke.

Insbesondere weisen die Streben Aussparungen auf, in welche die gasführenden Rohre der Brenner eingelegt sind. Dabei können bevorzugt Gasauslassöffnungen der gasführenden Rohre in dem Gaskanal der Strebe(n) im Bereich der Aussparungen münden.

Die gasführenden Rohre sind vorteilhaft einzeln lösbar an den Streben montiert, insbesondere wiederum mit von Hand lösbaren Schrauben, beispielsweise handbetätigtbaren Rändelschrauben. Dadurch wird die Reinigung des Garraums beziehungsweise der Streben und Brenner nochmals erleichtert.

Besonders bevorzugt weisen die gasführenden Rohre jeweils einen sich in Horizontalrichtung erstreckenden Gaseinlass auf, über welchen Gas geradlinig in das jeweilige Rohr einleitbar ist. Die Brenner müssen somit nicht auf Gasventilen gelagert werden und dadurch, dass das Gas linear in die Brenner einfließen kann, wird eine besonders günstige Gasverteilung innerhalb der Brenner erreicht.

Insbesondere außerhalb der Garraumwand können Gaseinspritzdüsen angeordnet sein, die den Gaseinlässen in den gasführenden Rohren unmittelbar gegenüberstehen oder sogar in die Gaseinlässe hineinragen. Damit kann Brenngas frei, das heißt ohne Abdichtung, in die gasführenden Rohre eingeleitet werden.

Gemäß einer vorteilhaften Ausführungsform der Erfindung tragen die Streben Abschirmbleche, beispielsweise Winkelbleche, welche die gasführenden Rohre von oben überdecken. Insbesondere können die Abschirmbleche von oben in Einbuchtungen, insbesondere in Form von Kerben oder Einprägungen, in den Streben eingelegt sein, sodass sie eine definierte Position relativ zu den gasführenden Rohren haben. Die Streben können bevorzugt im Bereich der Einbuchtungen gasdicht sein, um dort ein Entweichen von Gas zu verhindern.

Die Garraumwand weist bevorzugt Auflagen auf, auf welche die Streben mit ihren Axialenden aufgelegt sind. Insbesondere ist die Garraumwand bis auf die Auflagen für die Streben, eine Auflage für einen Grillrost, die insbesondere als umlaufender Rand ausgeführt ist, und gegebenenfalls wenigstens eine Auflage für einen Warmhalterost frei von sich horizontal erstreckenden Flächen. Das heißt, alle übrigen Flächen können senkrecht oder schräg angeordnet sein, um ein Ablaufen von Fett zu begünstigen.

Gemäß einer bevorzugten Ausführungsform der Erfindung weist die Garraumwand einen Boden auf, der eine Wärmeisolationsschicht und/oder Wärmereflektionsschicht umfasst. Beispielsweise ist der Boden aus Guss, insbesondere Aluminiumguss, hergestellt, wobei die Wärmeisolationsschicht und/oder die Wärmereflektionsschicht wenigstens teilweise oder vollständig eingegossen ist. Insbesondere ist die Wärmeisolationsschicht und/oder Wärmereflektionsschicht formschlüssig und/oder stoffschlüssig in den Boden eingebettet, sodass sie nicht herausgenommen werden kann.

Der Boden kann bevorzugt eine Vielzahl von horizontal nebeneinander angeordneten Fettabtropföffnungen aufweisen, unter denen eine herausnehmbare gemeinsame Fettauffangwanne angeordnet ist oder unter denen eine Vielzahl von einzelnen herausnehmbaren Fettauffangwannen angeordnet ist, insbesondere je Fettabtropföffnung eine separate Fettauffangwanne. Die Fettauffangwannen sind dadurch vergleichsweise klein und handlich und können leicht gereinigt werden, insbesondere in einer Geschirrspülmaschine. Außerdem müssen nur die Fettauffangwannen geleert beziehungsweise gereinigt werden, in deren Bereich gegrillt wurde. Ein Outdoor-Gasgrill mit solchen nebeneinander angeordneten Fettabtropföffnungen im Boden des Garraums kann auch unabhängig von der hier beschriebenen Lagerung der gasführenden Rohre vorgesehen sein.

Wenn mehrere horizontal nebeneinander angeordnete Fettabtropföffnungen vorgesehen sind, die gemäß einer Ausführungsform in ihrer Höhe auch versetzt zueinander angeordnet sein können, so kann in den zwischen den Fettabtropföffnungen verbleibenden Stegen im Boden der Garraumwand wenigstens eine Gasleitung und/oder ein elektrisches Kabel angeordnet sein, entweder vollständig innerhalb des Materials der Stege oder wenigstens teilweise auf beziehungsweise unter dem jeweiligen Steg. Bei nur zwei nebeneinander angeordneten Fettabtropföffnungen ist entsprechend nur ein Steg vorgesehen. Dadurch kann eine besonders kurze Leitungsführung für die Gasleitung und/oder das elektrische Kabel erreicht werden. Besonders wenn Gasventile im Bereich der Vorderseite des Outdoor-Gasgrills angeordnet sind und wenigstens ein Brenner und/oder elektrischer Zünder im Bereich der Hinterseite des Outdoor-Gasgrills beziehungsweise von dessen Garraum angeordnet ist, so wird die Notwendigkeit vermieden, dass eine entsprechende elektrische Leitung und/oder eine entsprechende Gasleitung seitlich außen um den Garraum herumgeführt werden muss. Die Leitung ist entsprechend kürzer und das Ansprechverhalten des Brenners, insbesondere beim Zünden, mit Bezug auf den Zeitpunkt der Betätigung des Gasventils, ist wesentlich verkürzt.

Im Garraum kann oberhalb der Brenner ein herausnehmbarer ein- oder mehrteiliger Grillrost angeordnet sein und oberhalb des Grillrosts ein herausnehmbarer, wenigstens zweiteiliger Warmhalterost. Solche Warmhalteroste sind herkömmlich einteilig und damit vergleichsweise lang, da sie sich durch den gesamten Garraum erstrecken. Durch die wenigstens zweiteilige Ausführungsform kann der Warmhalterost leichter in einer Geschirrspülmaschine gereinigt werden.

Die beiden Teile oder alle Teile des Warmhalterosts sind bevorzugt in einer Knickrichtung biegesteif aber lösbar miteinander verbunden, sodass der Warmhalterost nur im zusammengesetzten Zustand an seinen beiden axialen Enden an der Garraumwand aufgelegt werden muss. Eine solche Gestaltung des Warmhalterosts kann auch unabhängig von der hier dargestellten Lagerung der gasführenden Rohre bei einem Outdoor-Grill, insbesondere Outdoor-Gasgrill, ausgeführt werden.

Die Erfindung soll nachfolgend anhand eines Ausführungsbeispiels und den Figuren exemplarisch erläutert werden.

Es zeigen:
- Figur 1: ein Ausführungsbeispiel für einen erfindungsgemäßen Outdoor-Gasgrill;
- Figur 2: den Garraum des Outdoor-Gasgrills ohne Brenner und Streben;
- Figur 3: eine Explosionsdarstellung eines Garraums mit Streben, Brennern und Abschirmblechen;
- Figur 4: eine Verbindungsstelle zwischen Brenner und Strebe;
- Figur 5: den unteren Bereich des Garraums mit Fettauffangwannen;
- Figur 6: ein Ausführungsbeispiel für einen zweiteiligen Warmhalterost.

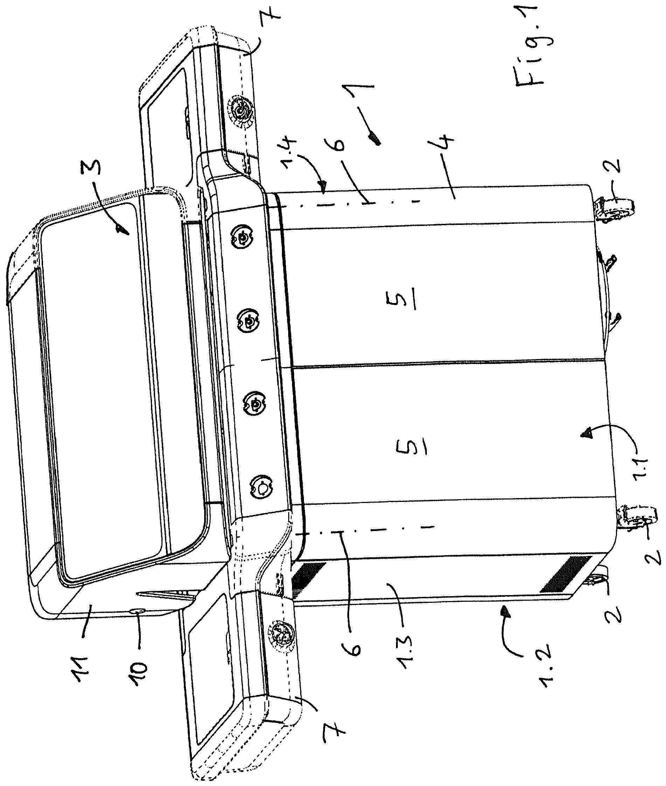

In der Figur 1 ist ein Outdoor-Gasgrill gezeigt, der ein Untergestell 1 mit einer Vorderseite 1.1, einer Rückseite 1.2 und zwei einander entgegengesetzten Außenseiten 1.3, 1.4 aufweist, die senkrecht zur Vorderseite 1.1 und zur Rückseite 1.2 angeordnet sind.

Das Untergestell 1 ist auf Rädern 2 verfahrbar, wobei im gezeigten Ausführungsbeispiel an allen vier unteren Ecken des Untergestells 1 jeweils ein Rad 2 vorgesehen ist. Gemäß einer alternativen Ausführungsform könnten auch nur zwei Räder 2 im Bereich nur einer Außenseite 1.3, 1.4 vorgesehen sein und im Bereich der anderen Außenseite 1.3, 1.4 wenigstens ein, zwei oder mehrere Füße, sodass der Outdoor-Gasgrill durch Anheben der Außenseite 1.3, 1.4 mit dem wenigstens einen Fuß schubkarrenartig mit den gegenüberliegenden Rädern 2 verfahrbar ist. Insbesondere können zwei Räder 2, beispielsweise auf einer der Außenseiten 1.3, 1.4 um eine Vertikalachse verschwenkbar sein und die anderen beiden Räder 2 können drehfest um eine Vertikalachse angeschlossen sein.

Auf dem Untergestell 1 ist ein Garraum 3 angeordnet, der hier durch eine Haube 11 abgedeckt ist, die über eine Horizontalachse 10 nach oben hinten verschwenkt werden kann, um einen Zugriff auf den Garraum zu ermöglichen. Die Haube 11 weist beispielsweise ein Sichtfenster auf, das den Blick von vorne in den Garraum 3 freigibt.

An den beiden Außenseiten 1.3, 1.4 des Untergestells 1 ist jeweils ein Seitentisch 7 vorgesehen, wobei ein solcher Seitentisch 7 nur eine Abstellfunktion haben kann oder Aufhängungen für Grillutensilien haben kann oder eine Gareinrichtung, wie einen Seitenkocher oder einen Seitengrill, umfassen kann.

Im gezeigten Ausführungsbeispiel sind auf der Vorderseite 1.1 des Untergestells 1 zwei Schwingtüren 5 vorgesehen, die einen Zugang zu dem durch das Untergestell 1 gebildeten Schrank 4 ermöglichen. Die Schwingtüren 5 sind jeweils um eine Vertikalachse 6 seitlich nach außen verschwenkbar, um den Zugang zu dem Innenraum des Schranks 4 freizugeben. Anstelle von zwei Schwingtüren 5 könnte auch eine einzige die Vorderseite 1.1 abdeckende Schwingtüre 5 vorgesehen sein.

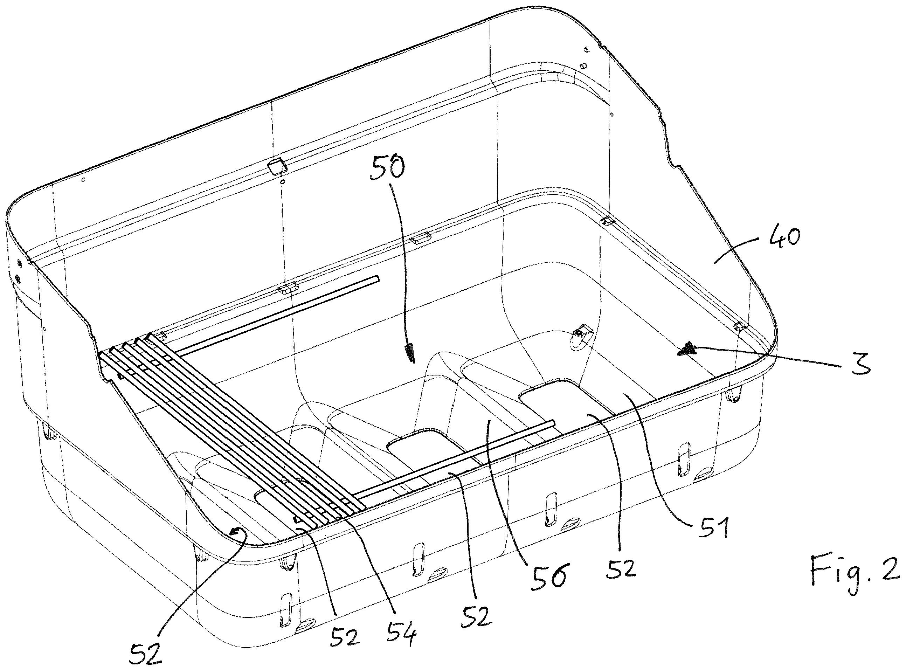

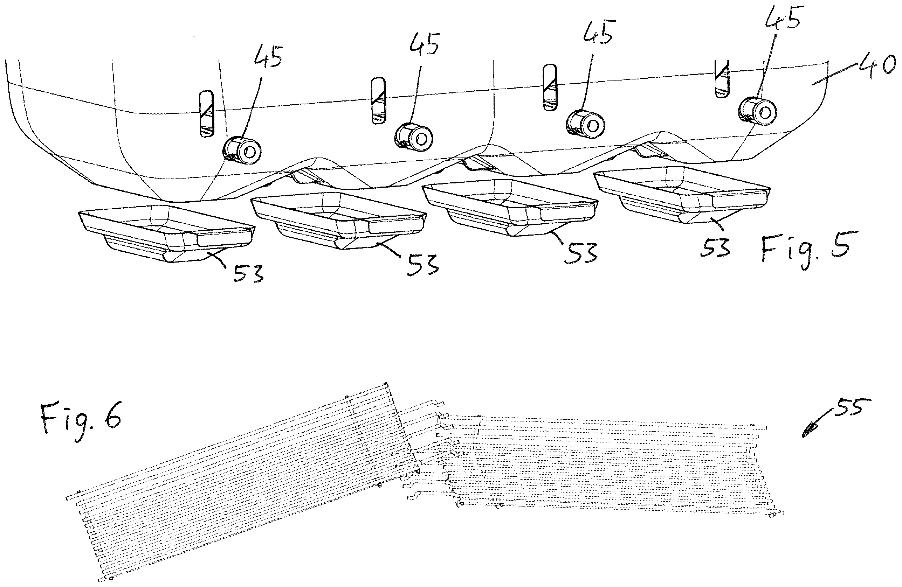

In der Figur 2 ist der Garraum 3 in einer Draufsicht schräg von oben dargestellt. Der Garraum 3 wird von einer Garraumwand 40 in horizontaler Umfangsrichtung, das heißt vertikal, vollständig umschlossen. Die Garraumwand 40 weist ferner einen Boden 50 auf, in dem mehrere, hier vier, Fettabtropföffnungen 52 vorgesehen sind. Unter den Fettabtropföffnungen 52 ist jeweils eine Fettauffangwanne 53 angeordnet, wie in der Figur 5 gezeigt ist.

Die Garraumwand 40 weist eine Auflage, hier in Form eines umlaufenden Rands oder auch in Form von einzelnen Auflageflächen, für einen Grillrost 54 auf, der nur schematisch angedeutet ist. Ferner ist eine Auflage für einen Warmhalterost 55 oberhalb des Grillrots 54 vorgesehen. Ein Ausführungsbeispiel für einen zweiteiligen Warmhalterost 55 ist in der Figur 6 gezeigt. Wie man sieht, sind die beiden Teile derart aneinandergekoppelt, dass die beiden Teile formschlüssig aneinandergehalten werden, wenn sie auf der Garraumwand 40 gelagert werden, jedoch durch Anheben des Warmhalterosts 55 im Bereich der Schnittstelle zwischen den beiden Teilen auseinandergenommen werden können.

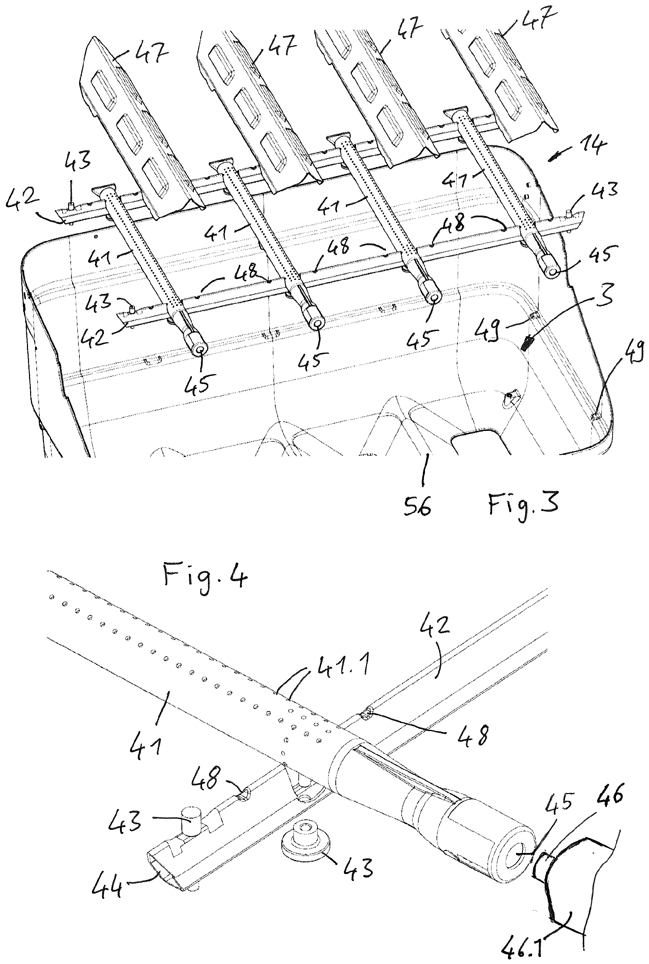

In den Figuren 3 und 4 sind die Brenner 14, die auch als Hauptbrenner bezeichnet werden, dargestellt, mit welchen der Garraum 3 beziehungsweise auf dem Grillrost 54 befindliche Speisen gegart werden. Die Brenner 14 sind in Form von gasführenden, hier sich linear erstreckenden, Rohren 41 mit einer Vielzahl von Gasauslassöffnungen 41.1 ausgeführt. Die gasführenden Rohre 41 sind parallel zueinander auf Streben 42 gelagert, wobei die Streben 42 als Hohlstreben ausgeführt sind, die einen Gaskanal 44 umschließen, der über Gasauslassöffnungen 41.1 in gasleitender Verbindung mit den gasführenden Kanälen in den Rohren 41 steht. Die Streben 42 bilden damit Flammbrücken, die automatisch die Brenner 14 entflammen, bei denen die Flamme erloschen ist.

Die Rohre 41 sind hierfür in Aussparungen in den Streben 42 eingesetzt, sodass Gasauslassöffnungen 41.1 im jeweiligen Gaskanal 44 münden.

Die Kanäle in den Rohren 41 und Streben 42 können einen beliebigen Strömungsquerschnitt aufweisen, beispielsweise einen kreisrunden oder elliptischen Querschnitt, einen rechteckigen Querschnitt, einen quadratischen Querschnitt oder einen polygonförmigen Querschnitt.

Die Rohre 41 weisen Gaseinlässe 45 auf, die am stirnseitigen Ende eines jeden Rohres 41 vorgesehen sind und ein geradliniges Einströmen von Gas in Längsrichtung der Rohre 41 ermöglichen. Den Gaseinlässen 45 stehen Gaseinspritzdüsen 46 axial gegenüber, die nur schematisch in der Figur 4 dargestellt sind. Insbesondere sind Rohre 41 durch eine Garraumwand 40 hindurchgeführt, sodass deren Gaseinlässe 45 auf der Außenseite des Garraums 3 herausragen. Somit kann die Gaszufuhr zu den Gaseinlässen 45 über extern zum Garraum 3 angeordnete Ventile 46.1, die den Strömungsquerschnitt für Gas zu den Gaseinspritzdüsen 46 mehr oder minder freigeben, geregelt werden. Durch die Anordnung der Gaseinlässe 45 stirnseitig an den Rohren 41 kann das Gas über die Gaseinspritzdüsen 46 geradlinig in die gasführenden Rohre 41 der Brenner 14 einströmen, ohne das eine gasdichte Abdichtung zwischen den Gaseinspritzdüsen 46 und den Rohren 41 erforderlich ist. Die Gaseinspritzdüsen 46 können unmittelbar an einem Gasaustrittsende der Ventile 46.1 vorgesehen sein.

Die gasführenden Rohre 41 sind ausschließlich auf den Streben 42 gelagert und die Streben 42 sind auf Auflagen 49 in der Garraumwand 40 gelagert. Somit kann eine direkte Lagerung der Brenner 14 an der Garraumwand 40 vermieden werden, entsprechende Auflagen können eingespart werden.

Alle Bauteile im Garraum 3 - Streben 42, Rohre 41 und die Rohre 41 überdeckende Abschirmbleche 47 - sind ohne Werkzeug demontierbar und herausnehmbar, bevorzugt einzeln herausnehmbar, im Garraum 3 gelagert. Die Streben 42 sind mit Rändelschrauben 43 an der Garraumwand 40 montiert und die gasführenden Rohre 41 sind mit Rändelschrauben 43 an den Streben 42 montiert. Die Rändelschrauben 43 können alle von Hand gelöst und angezogen werden.

Die Abschirmbleche 47 sind von oben die Gasauslassöffnungen 41.1 in den Rohren 41 vollständig überdeckend in Einprägungen beziehungsweise Einbuchtungen 48 in den Streben 42 eingesetzt, wobei für jedes Abschirmblech 47 jeweils eine Einbuchtung 48 beidseitig des abzudeckenden Rohres 41 in der Strebe 42 vorgesehen ist.

In den Boden 50 der Garraumwand 40 kann eine Wärmeisolationsschicht und/oder Wärmereflektionsschicht 51 eingegossen sein, welche den Innenraum des Untergestells 1 vor einem übermäßigen Wärmeeintrag schützt.

### Bezugszeichenliste

- 1: Untergestell
- 1.1: Vorderseite
- 1.2: Rückseite
- 1.3: Außenseite
- 1.4: Außenseite
- 2: Rad
- 3: Garraum
- 4: Schrank
- 5: Schwingtüre
- 6: Vertikalachse
- 7: Seitentisch
- 10: Horizontalachse
- 11: Haube
- 14: Brenner
- 40: Garraumwand
- 41: Rohr
- 41.1: Gasauslassöffnung
- 42: Strebe
- 43: Rändelschraube
- 44: Gaskanal
- 45: Gaseinlass
- 46: Gaseinspritzdüse
- 46.1: Ventil
- 47: Abschirmblech
- 48: Einbuchtung
- 49: Auflage
- 50: Boden
- 51: Wärmereflektionsschicht
- 52: Fettabtropföffnung
- 53: Fettauffangwanne
- 54: Grillrost
- 55: Warmhalterost
- 56: Steg

## Patentansprüche

1. Outdoor-Gasgrill
1.1 mit einem Garraum (3), wobei
1.2 der Garraum (3) zumindest in horizontaler Umfangsrichtung von einer Garraumwand (40) umschlossen wird und
1.3 die Garraumwand (3) Brenner (14) in Form von gasführenden Rohren (41) mit jeweils einer Vielzahl von Gasauslassöffnungen (41.1) trägt, wobei sich die Rohre (41) in einer ersten Richtung horizontal durch den Garraum (3) erstrecken;
**dadurch gekennzeichnet, dass**
1.4 die gasführenden Rohre (41) auschließlich auf wenigstens zwei Streben (42) montiert sind, die sich horizontal in einer zweiten Richtung senkrecht oder schräg zur ersten Richtung im Garraum (3) erstrecken, wobei die Streben (42) herausnehmbar im Garraum (3) montiert sind.

2. Outdoor-Gasgrill gemäß Anspruch 1, **dadurch gekennzeichnet, dass** die Streben (42) lösbar, bevorzugt einzeln lösbar, an der Garraumwand (40) montiert sind.

3. Outdoor-Gasgrill gemäß einem der Ansprüche 1 oder 2, **dadurch gekennzeichnet, dass** die Streben (42) werkzeugfrei, bevorzugt einzeln, aus dem Garraum (3) herausnehmbar, insbesondere mit handbetätigbaren Rändelschrauben (43) und/oder Stecksicherungselementen, im Garraum (3) montiert sind.

4. Outdoor-Gasgrill gemäß einem der Ansprüche 1 bis 3, **dadurch gekennzeichnet, dass** wenigstens eine Strebe (42) als Hohlstrebe ausgeführt ist, die einen Gaskanal (44) umschließt, der in gasleitender Verbindung mit den gasführenden Rohren (41) steht.

5. Outdoor-Gasgrill gemäß einem der Ansprüche 1 bis 4, **dadurch gekennzeichnet, dass** die gasführenden Rohre (41) einzeln lösbar an den Streben (42) montiert sind, insbesondere mit handbetätigbaren Rändelschrauben (43).

6. Outdoor-Gasgrill gemäß einem der Ansprüche 1 bis 5, **dadurch gekennzeichnet, dass** die gasführenden Rohre (41) jeweils einen sich in Horizontalrichtung erstreckenden Gaseinlass (45) aufweisen, über welchen Gas geradlinig in das jeweilige Rohr (41) einleitbar ist.

7. Outdoor-Gasgrill gemäß Anspruch 6, **dadurch gekennzeichnet, dass** Gaseinspritzdüsen (46) vorgesehen sind, insbesondere außerhalb der Garraumwand (40), wobei die Gaseinspritzdüsen (46) den Gaseinlässen (45) unmittelbar gegenüberstehen oder in die Gaseinlässe (45) hineinragen.

8. Outdoor-Gasgrill gemäß einem der Ansprüche 1 bis 7, **dadurch gekennzeichnet, dass** die Streben (42) Abschirmbleche (47) tragen, welche die gasführenden Rohre (41) von oben überdecken.

9. Outdoor-Gasgrill gemäß Anspruch 8, **dadurch gekennzeichnet, dass** die Abschirmbleche (47) von oben in Einbuchtungen (48) in den Streben (42) eingelegt sind.

10. Outdoor-Gasgrill gemäß einem der Ansprüche 1 bis 9, **dadurch gekennzeichnet, dass** die Garraumwand (40) Auflagen (49) aufweist, auf welche die Streben (42) mit ihren Axialenden aufgelegt sind.

11. Outdoor-Gasgrill gemäß einem der Ansprüche 1 bis 10, **dadurch gekennzeichnet, dass** die Garraumwand (40) einen Boden (50) aufweist, der eine Wärmeisolationsschicht und/oder Wärmereflektionsschicht (51) umfasst.

12. Outdoor-Gasgrill gemäß Anspruch 11, **dadurch gekennzeichnet, dass** der Boden (50) aus Guss, insbesondere Aluminiumguss, hergestellt ist, in welches die Wärmeisolationsschicht (51) teilweise oder vollumfänglich eingegossen ist.

13. Outdoor-Gasgrill gemäß einem der Ansprüche 11 oder 12, **dadurch gekennzeichnet, dass** der Boden (50) eine Vielzahl von horizontal nebeneinander angeordneten Fettabtropföffnungen (52) aufweist, unter denen eine herausnehmbare gemeinsame oder eine Vielzahl von einzelnen herausnehmbaren Fettauffangwannen (53) angeordnet ist.

14. Outdoor-Gasgrill gemäß einem der Ansprüche 1 bis 13, **dadurch gekennzeichnet, dass** im Garraum (3) oberhalb der Brenner (14) ein herausnehmbarer ein- oder mehrteiliger Grillrost (54) angeordnet ist und oberhalb des Grillrosts (54) ein herausnehmbarer wenigstens zweiteiliger Warmhalterost (55) angeordnet ist.

15. Outdoor- Gasgrill gemäß einem der Ansprüche 1 bis 14, wobei im Garraum (3) ein herausnehmbarer Warmhalterost (55) angeordnet ist, **dadurch gekennzeichnet, dass** der Warmhalterost (55) wenigstens zweiteilig ist, wobei die beiden Teile oder alle Teile des Warmhalterosts (55) in einer ersten Knickrichtung biegesteif, aber lösbar aneinander angeschlossen sind und der Warmhalterost (55) derart im zusammengesetzten Zustand an seine beiden axialen Enden im Garraum (3) gelagert ist, dass die erste biegesteife Knickrichtung an der Schnittstelle zwischen den Teilen des Warmhalterosts (55) vertikal nach unten gerichtet ist, wobei die beiden Teile oder alle Teile des Warmhalterosts (55) insbesondere in einer zweiten Knickrichtung, die der ersten Knickrichtung entgegengesetzt ist, biegeschlaff lösbar aneinander angeschlossen sind.
